# EUROPEAN PATENT APPLICATION

(11) **EP 2 273 745 A1**
(43) Date of publication of application: **12.01.2011**
(21) Application number: 09745422.7
(22) Date of filing: 13.05.2009
(51) Int. Cl.: H04L 29/06

(54) **METHOD, SYSTEM, CORRESPONDING APPARATUS AND COMMUNICATION TERMINAL FOR PROVIDING MBMS SERVICE**

(30) Priority: 15.05.2008 CN 200810028117; 20.11.2008 CN 200810181513
(71) Applicant: Huawei Technologies Co., Ltd., Longgang District, Shenzhen Guangdong 518129 (CN)
(72) Inventor: ZHONG, Jianfeng, Longgang District Shenzhen 518129 (CN); ZHU, Dongming, Longgang District Shenzhen 518129 (CN); CHENG, Shumin, Longgang District Shenzhen 518129 (CN); WANG, Xiao, Longgang District Shenzhen 518129 (CN); WANG, Geng, Longgang District Shenzhen 518129 (CN); LI, Jincheng, Longgang District Shenzhen 518129 (CN)
(74) Representative: Kreuz, Georg Maria
(86) International application number: PCT/CN2009/071787
(87) International publication number: WO 2009/138038

(57) **Abstract**

A method, a system, a security device, a service control device, and a communication terminal for providing a Multimedia Broadcast/Multicast Service (MBMS) service are provided. The method includes the following steps: A service control module in an IP Multimedia Subsystem (IMS) system carries out service authorization according to a service authorization request, and obtains an authorization-passed result. The service control module sends the authorization-passed result to a security module. The security module obtains the authorization-passed result and then sends a service decryption code of the MBMS service to UEs. In the present invention, a controlling capacity of an IMS and a bearer capacity of an MBMS are multiplexed based on an IMS system and an MBMS system to achieve IPTV services, so as to achieve the uniform authorization and uniform network management. The binding of the IPTV service with other services based on the IMS can be achieved by using the IMS, and personalized services can be provided to UEs.

## Description

The application claims the benefit of priority to Chinese Patent Application No. 200810028117.5, filed on May 15, 2008, and entitled "METHOD, SYSTEM, CORRESPONDING DEVICE, AND COMMUNICATION TERMINAL FOR PROVIDING MBMS SERVICE", and priority to Chinese Patent Application No. 200810181513.1, filed on November 20, 2008, and entitled "METHOD, SYSTEM, CORRESPONDING DEVICE, AND COMMUNICATION TERMINAL FOR PROVIDING MBMS SERVICE", which are incorporated herein by reference in their entireties.

### FIELD OF THE TECHNOLOGY

The present invention relates to the field of communications, and more particular to a method, a system, a corresponding device, and a communication terminal for providing an MBMS service.

### BACKGROUND OF THE INVENTION

The Multimedia Broadcast/Multicast Service (MBMS) is proposed by 3rd Generation Partnership Project (3GPP), a global organization for standardization. The MBMS technology is a point-to-multipoint service in which a data source is sent to multiple pieces of user equipment (UE) over a shared transmission link.

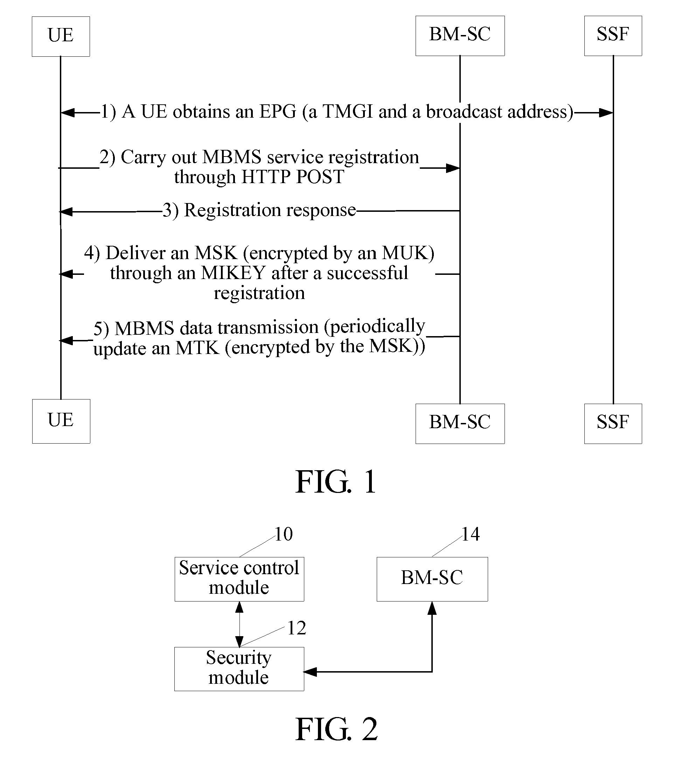

A timing process of providing an Internet Protocol Television (IPTV) service based on MBMS is as shown in FIG. 1. The process includes the following steps:
1). A UE obtains an Electronical Program Guide (EPG) from a Service Selection Function (SSF) module in a system.
2). The UE carries out service registration with a broadcast/multicast service center (BM-SC) through the Hypertext Transfer Protocol POST (HTTP POST).
3). The BM-SC sends a registration response to the UE.
4). If the registration is successful, the BM-SC delivers an MBMS Service Key (MSK) encrypted by an MBMS User Key (MUK) via Multimedia Internet Keying (MIKEY) after the successful registration. The process of obtaining the MUK through Generic Bootstrapping Architecture (GBA)/Generic Authentication Architecture (GAA) is not shown in FIG. 1.
5). The BM-SC transmits MBMS data encrypted by an MTK to the UE. The MSK can decrypt the MTK, and further decrypt transmission data. The BM-SC can periodically change the encryption code MTK of the MBMS data, and meanwhile, it needs to periodically update the MSK of the UE.

The above technology provides IPTV based on the MBMS, but cannot be controlled by an IP Multimedia Subsystem (IMS) network, and thus the various service capabilities of the IMS cannot be used.

### SUMMARY OF THE INVENTION

The present invention is directed to a method, a system, a corresponding device, and a communication terminal for providing an MBMS service, so as to perform service control on the provided MBMS service with an IMS system.

In order to address the above technical problem, in an embodiment, the present invention provides a method for providing an MBMS service based on the IMS system. The method includes the following steps: A service control module in the IMS system carries out service authorization according to a service authorization request, and obtains an authorization-passed result. The service control module sends the authorization-passed result to a security module. The authorization-passed result is used to instruct the security module to send a service decryption code of the MBMS service to a UE according to the authorization-passed result.

Meanwhile, in an embodiment, the present invention further provides a security device. The device includes a first receiving module and a first sending module. The first receiving module is configured to receive an authorization-passed result sent by a service control module in an IMS system. The first sending module is configured to send a service decryption code of an MBMS service to the UE according to the authorization-passed result.

In an embodiment, the present invention provides a service control device. The device includes a first authorization sub-module and a first sending sub-module. The first authorization sub-module is configured to carry out service authorization according to a service authorization request and obtain an authorization-passed result. The first sending sub-module is configured to send the authorization-passed result to a security module. The authorization-passed result is used to instruct the security module to send a service decryption code of an MBMS service to a UE according to the authorization-passed result.

In an embodiment, the present invention further provides an IMS system. The system includes a service control module in the IMS system, a security module, and a BM-SC. The service control module in the IMS system is configured to carry out service authorization according to a service authorization request, obtain an authorization-passed result, and send the authorization-passed result to the security module. The security module is configured to send a service decryption code of an MBMS service to a UE after obtaining the authorization-passed result. The BM-SC is configured to provide an MBMS service to the UE, and service content of the MBMS service is used after being decrypted by the service decryption code.

In an embodiment, the present invention further provides a communication terminal. The terminal includes a first sending unit and a first receiving unit. The first sending unit is configured to send a service authorization request to a service control device in an IMS system, or send a service authorization request carrying an Internet protocol multimedia public identity (IMPU) to a security module. The service authorization request is used to request a service decryption code of an MBMS service from a network side. The first receiving unit is configured to receive a service decryption code of an MBMS service sent by the security device of the network side.

In the embodiments of the present invention, a controlling capacity of the IMS and a bearer capacity of the MBMS are multiplexed based on an IMS system and an MBMS system to achieve IPTV services, so as to achieve the uniform authorization and uniform network management. The binding of the IPTV service (such as a Linear TV service) with other IMS-based services can be achieved by using the IMS, and personalized services can be provided to UEs.

### BRIEF DESCRIPTION OF THE DRAWINGS

FIG. 1 is a schematic flow chart of providing an MBMS service in the prior art;
FIG. 2 is a schematic structural view of a system for providing an MBMS service based on an IMS system according to an embodiment of the present invention;
FIG. 3a is a schematic structural view of Embodiment 1 of a service control module according to the present invention;
FIG. 3b is a schematic structural view of an embodiment of a first sending sub-module according to the present invention;
FIG. 3c is a schematic structural view of Embodiment 2 of a service control module according to the present invention;
FIG. 3d is a schematic structural view of Embodiment 3 of a service control module according to the present invention;
FIG. 3e is a schematic structural view of Embodiment 4 of a service control module according to the present invention;
FIG. 3f is a schematic structural view of Embodiment 5 of a service control module according to the present invention;
FIG. 4a is a schematic structural view of Embodiment 1 of a security module according to the present invention;
FIG. 4b is a schematic structural view of an embodiment of a direct sending sub-module according to the present invention;
FIG. 4c is a schematic structural view of Embodiment 2 of a security module according to the present invention;
FIG. 4d is a schematic structural view of Embodiment 3 of a security module according to the present invention;
FIG. 5a is a schematic structural view of Embodiment 1 of a system for providing an MBMS service based on an IMS system according to an embodiment of the present invention;
FIG. 5b is a schematic structural view of Embodiment 2 of a system for providing an MBMS service based on an IMS system according to an embodiment of the present invention;
FIG. 5c is a schematic structural view of Embodiment 3 of a system for providing an MBMS service based on an IMS system according to an embodiment of the present invention;
FIG. 6a is a schematic structural view of Embodiment 1 of a communication terminal according to the present invention;
FIG. 6b is a schematic structural view of Embodiment 2 of a communication terminal according to the present invention;
FIG. 6c is a schematic structural view of Embodiment 3 of a communication terminal according to the present invention;
FIG. 6d is a schematic structural view of Embodiment 4 of a communication terminal according to the present invention;
FIG. 6e is a schematic structural view of Embodiment 5 of a communication terminal according to the present invention;
FIG. 7 is a schematic flow chart of a method for providing an MBMS service based on an IMS system according to an embodiment of the present invention;
FIG. 8 is a schematic flow chart of Embodiment 1 of a method for providing an MBMS service based on an IMS system according to the present invention;
FIG. 9 is a schematic flow chart of Embodiment 2 of a method for providing an MBMS service based on an IMS system according to the present invention;
FIG. 10 is a schematic flow chart of Embodiment 3 of a method for providing an MBMS service based on an IMS system according to the present invention;
FIG. 11 is a schematic flow chart of Embodiment 4 of a method for providing an MBMS service based on an IMS system according to the present invention;
FIG. 12 is a schematic flow chart of Embodiment 5 of a method for providing an MBMS service based on an IMS system according to the present invention;
FIG. 13 is a schematic flow chart of Embodiment 6 of a method for providing an MBMS service based on an IMS system according to the present invention;
FIG. 14 is a schematic flow chart of Embodiment 7 of a method for providing an MBMS service based on an IMS system according to the present invention;
FIG. 15 is a schematic flow chart of switching IMS/MBMS services by a UE; and
FIG. 16 is a schematic flow chart of Embodiment 8 of a method for providing an MBMS service based on an IMS system according to the present invention.

### DETAILED DESCRIPTION OF THE EMBODIMENTS

The embodiments of the present invention are described below with reference to the accompany drawings.

FIG. 2 is schematic structural view of a system for providing an MBMS service based on an IMS system according to an embodiment of the present invention. As shown in FIG. 2, the system includes a service control module 10, a security module 12, and a BM-SC 14.

The service control module 10 (or referred to as a service control device) is configured to carry out service authorization according to a service authorization request, obtain an authorization-passed result, and then send the authorization-passed result to the security module.

The security module 12 (or referred to as a security device) is configured to send a service decryption code of an MBMS service to a UE according to the authorization-passed result after obtaining the authorization-passed result. The service decryption code may be an MSK or an MSK encrypted by using an encryption code. Specifically, the security module 12 may directly send an MSK to the UE by MIKEY, or send an MSK to the service control module 10, which then sends the MSK to the UE through Session Initiation Protocol (SIP) signaling.

The BM-SC 14 is configured to provide an MBMS service to the UE. Service content of the MBMS service is used after being decrypted by the service decryption code MSK. The MBMS service includes multicast/broadcast services of the MBMS and enhanced broadcast service of Enhanced MBMS (EMBMS).

It should be noted that the service content of the MBMS service provided to the UE is encrypted by using an encryption code, which can be referred to as an MTK. Actually, the service decryption code sent herein may be a decryption code MSK used to decrypt the MTK.

The system further includes devices such as an IMS core network element. Moreover, when services are provided to a mobile UE, the UE needs to communicate with other network elements in the system through a mobile access network element, which are known to persons of ordinary skill in the art, and thus are not described herein again.

The service authorization request sent by a UE may be sent to the service control module 10 through an IMS core network, or may be sent to the service control module 10 through the security module 12.

The IMS core network (IMS Core) usually includes a Proxy Call Session Control Function (P-CSCF), a Serving Call Session Control Function (S-CSCF), and an Interrogating Call Session Control Function (I-CSCF). The CSCF is short for Call Session Control Function, and the core CSCF includes an S-CSCF, a P-CSCF, and an I-CSCF. The S-CSCF is in a core control status in the IMS and is used to register, session control, and process, and trigger a service to an application server. The P-CSCF is a first access point to the IMS for the UE. The I-CSCF is an access point from a visitor domain to a home domain, and is used to search for home UE information, assign S-CSCF for the UE, and so on.

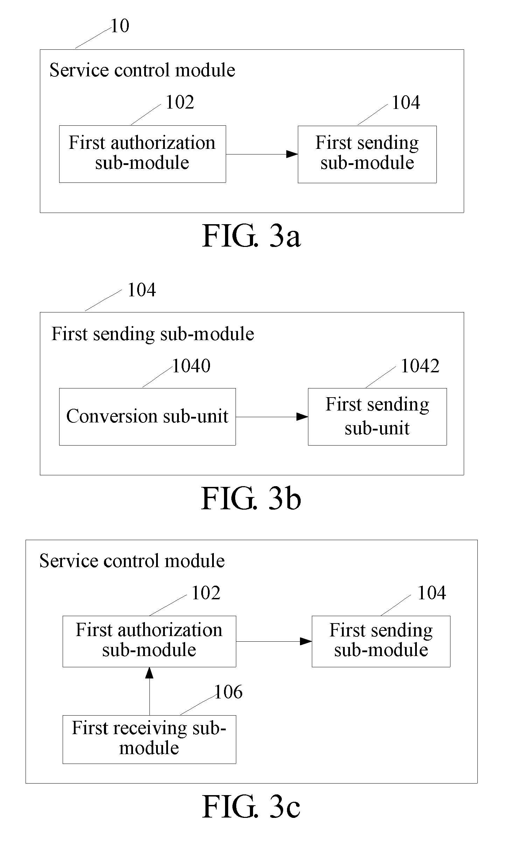

FIG. 3a is a structural view of an embodiment of a service control module. As shown in FIG. 3a, the service control module 10 includes a first authorization sub-module 102 and a first sending sub-module 104. The first authorization sub-module 102 is configured to carry out service authorization according to the service authorization request and obtain an authorization-passed result. The first sending sub-module 104 is configured to send the authorization-passed result to a security module. The authorization-passed result is used to instruct the security module to send a service decryption code of an MBMS service to a UE according to the authorization-passed result.

As shown in FIG. 3b, the first sending sub-module 104 further includes a conversion sub-unit 1040 and a first sending sub-unit 1042. The conversion sub-unit 1040 is configured to match a corresponding decryption code identity according to a service identity in the authorization-passed result. The first sending sub-unit 1042 is configured to send the authorization-passed result including the decryption code identity obtained by the conversion sub-unit to the security module.

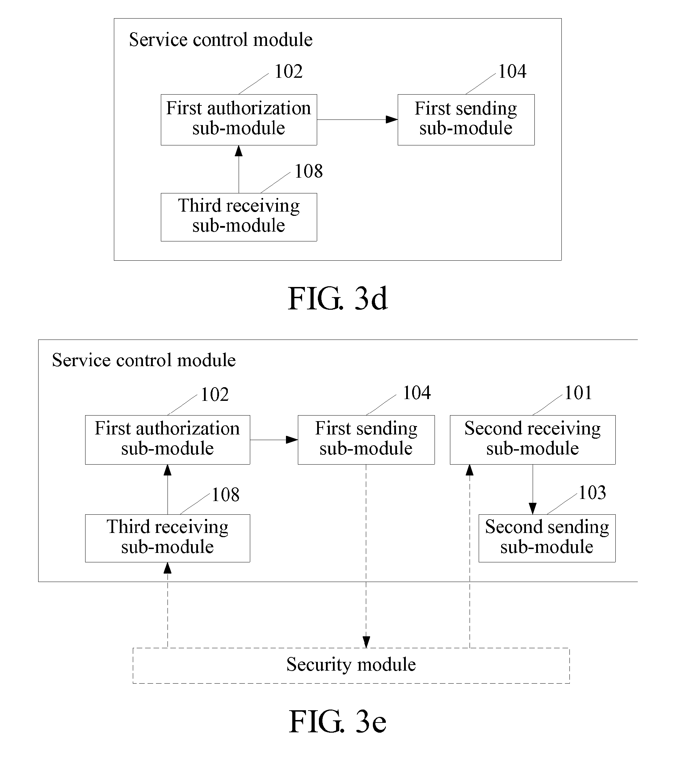

The service control module further includes a first receiving sub-module 106 or a third receiving sub-module 108. As shown in FIG. 3c, the first receiving sub-module 106 is configured to receive a service authorization request sent by a UE through an IMS Core. As shown in FIG. 3d, the third receiving sub-module 108 is configured to receive the service authorization request sent by the UE through the security module.

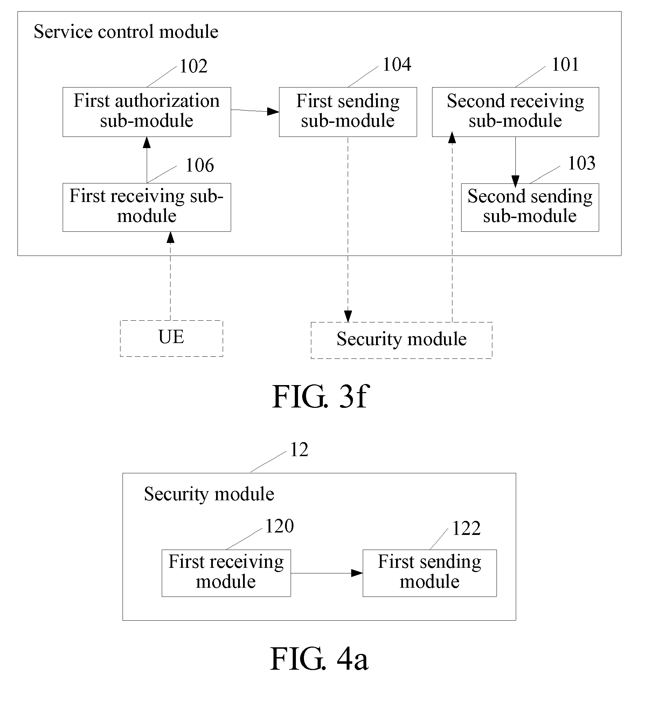

FIG. 4a is a structural view of an embodiment of the security module 12. As shown in FIG. 4a, the security module 12 includes a first receiving module 120 and a first sending module 122.

The first receiving module 120 is configured to receive the authorization-passed result sent by the service control module. The authorization-passed result may be an authorization result (such as an identity of a channel passed authorization, that is, a service identity), or an MSK identity for requesting an MSK, and the MSK identity is obtained by matching according to an authorization result in the service control module.

The first sending module 122 is configured to send a service decryption code of an MBMS service to a UE according to the authorization-passed result.

If the authorization-passed result received by the first receiving module 120 includes a decryption code identity, the first sending module 122 is configured to send a service decryption code of an MBMS service corresponding to the decryption code identity to the UE according to the authorization-passed result.

The first sending module 120 may include a direct sending sub-module or an indirect sending sub-module. The direct sending sub-module is configured to send a decryption code to the UE by MIKEY after obtaining the authorization-passed result. The indirect sending sub-module is configured to send a decryption code to a corresponding service control device after obtaining the authorization-passed result, and then the service control device sends the decryption code to the UE through SIP signaling. In other words, the security module 12 may send an MSK to the UE in two modes.

If the authorization-passed result received by the first receiving module 120 includes a service identity, the direct sending sub-module or the indirect sending sub-module may include a conversion sub-module 1220 and a sending sub-module 1222.

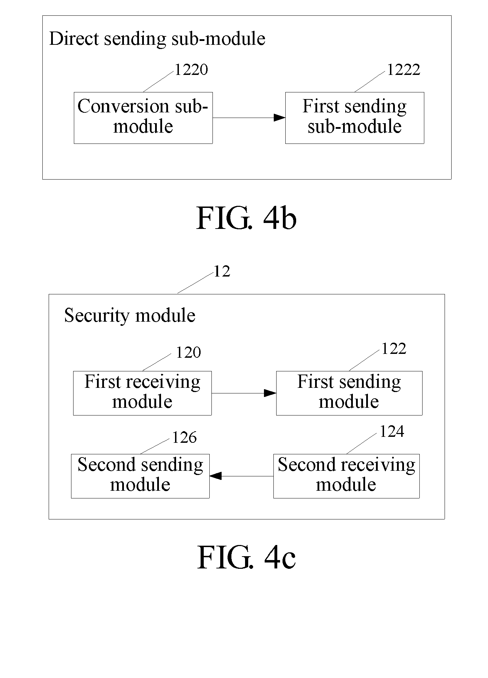

The conversion sub-module 1220 is configured to match a decryption code identity corresponding to the service identity in the authorization-passed result. The sending sub-module 1222 is configured to send a service decryption code of an MBMS service corresponding to the decryption code identity to the UE according to the decryption code identity obtained by the conversion sub-module. The sending sub-module 1222 in the direct sending sub-module sends a decryption code to the UE by MIKEY; however, the sending sub-module 1222 in the indirect sending sub-module sends a decryption code to a corresponding service control device, and the service control device then sends the decryption code through SIP signaling. The direct sending sub-module is shown in FIG. 4b.

Definitely, the function of the conversion sub-module 1220 also may be implemented inside the first receiving module 120.

As shown in FIG. 4a, if the service control module 10 includes the first receiving sub-module 106, accordingly, the security module 12 only includes the first receiving module 120 and the first sending module 122.

As shown in FIG. 4c, if the service control module 10 includes the third receiving sub-module 108, accordingly, in addition to including the first receiving module 120 and the first sending module 122, the security module 12 may further include a second receiving module 124 and a second sending module 126. The second receiving module 124 is configured to receive a service authorization request of the UE, and the service authorization request may be an HTTP POST sent by the UE. The second sending module 126 is configured to send a service authorization request to a corresponding service control module according to the service authorization request.

If an MSK is sent through the indirect sending sub-module in the security module, the service control module should further include a second receiving sub-module and a second sending sub-module. The second receiving sub-module is configured to receive a corresponding decryption code sent by the security module. The second sending sub-module is configured to send the decryption code to the UE through SIP signaling. A service control module and other modules are shown in FIG. 3e or FIG. 3f, such as connection between the UE and the security module.

The specific message of the service authorization request sent by the UE may be an SIP message (including an SIP session message and an SIP non-session message), such as an INVITE message or a Subscribe message, or an HTTP POST message. These messages may carry an IMPU and channel information (a service identity) requesting for authorization.

The authorization-passed result may include a channel identity passed authorization or an MSK identity. The authorization-passed result may be a right notification or an MSK request.

When the UE accesses a home location service from the home location, the UE only needs to obtain a decryption code from the security module 12 in the home location, the service control module 10 belongs to the home location, and is configured to carry out service authorization according to the service authorization request or a service right authorization request, obtain an authorization-passed result, and then send the authorization-passed result to the security module 12.

When the UE accesses a visitor location service from the visitor location, the UE needs to obtain a decryption code from the security module 12 in the visitor location, the service control module 10 includes a service control module of the home location and a service control module of the visitor location. The service control module of the home location is configured to carry out service authorization according to the service authorization request, search for the service control module of the visitor location of the UE, obtain an authorization-passed result, and then send the authorization-passed result to the service control module of the visitor location. The service control module of the visitor location is configured to receive the authorization-passed result and forward the authorization-passed result to the security module.

When the UE accesses the visitor location service from the visitor location, but the visitor location has no corresponding service control module, the service control module of the home location carries out service authorization and sends the authorization-passed result to the security module of the visitor location.

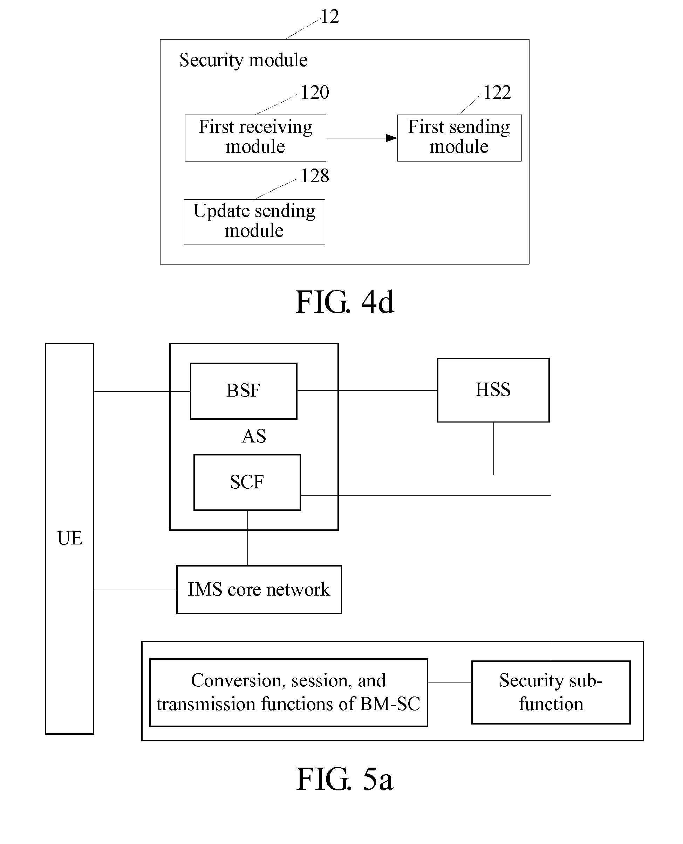

After the UE obtains a corresponding MBMS service, an encryption code of service data sent by a BM-SC may need to be updated periodically, and then the security module 12, based on FIG. 4a or FIG. 4c, may further include an update sending module 128, configured to send an updated decryption code to the UE and the BM-SC. Specifically, the update sending module sends an updated decryption code to the UE, and then the UE can decrypt the provided service content according to the decryption code after obtaining the updated decryption code. As shown in FIG. 4d, the security module includes the first receiving module 120, the first sending module 122, and the update sending module 128. Other structures of the security module are not described herein one by one.

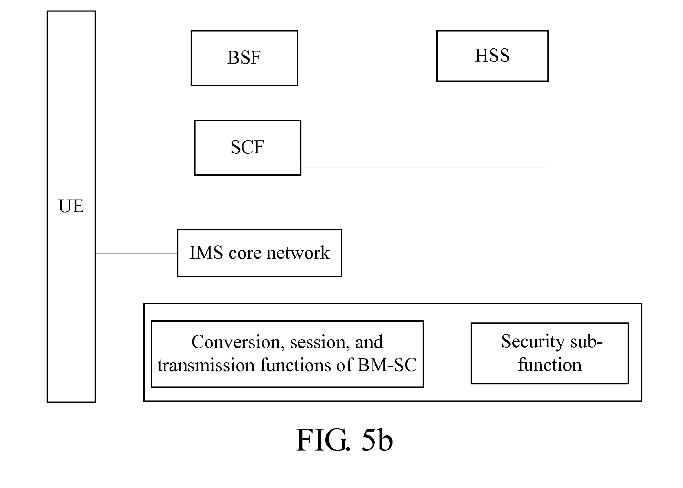

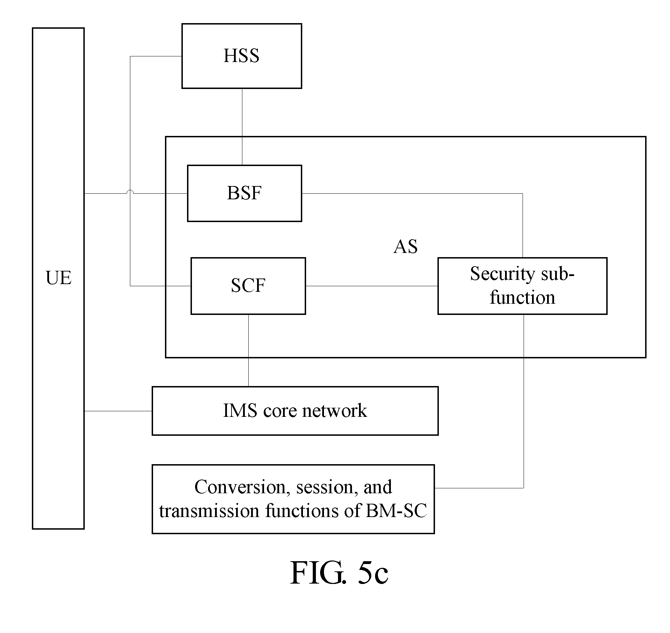

In the implementation of combining with other network elements in the network, a service control module (Service Control Function, SCF) and a Bootstrapping Server Function (BSF) in the network are integrated as an Application Server (AS), and the security module is integrated with conversion, session, and transmission functions of the BM-SC, which is shown in FIG. 5a. Or, the SCF and the BSF are configured separately, and a Security sub-function is integrated with the conversion, session, and transmission functions of the BM-SC, which is shown in FIG. 5b. Or, the SCF, the BSF, and the security module are integrated, which is shown in FIG. 5c.

If the security module is integrated with the conversion, session, and transmission functions of the BM-SC, the security module becomes a part of an MBMS network, and can work with a signaling of the MBMS network. If the security module is integrated with the SCF, the security module becomes a part of an IMS system, and can work with a signaling of the IMS system.

As can be seen from the above description, in the present invention, a controlling capacity of the IMS and a bearer capacity of the MBMS are multiplexed based on the IMS system and the MBMS system to achieve IPTV services, so as to achieve the uniform authorization and uniform network management. The binding of the Linear TV (LTV) service with other services based on the IMS can be achieved by using the IMS, and personalized services can be provided to UEs.

The system shown in FIG. 2 further includes a UE terminal, and the terminal can carry out service authorization by sending an HTTP POST message. The message carries an IMPU instead of an international mobile subscriber identity (IMSI).

Based on different UE terminal capabilities, the UE terminal also can carry out service authorization and obtain an MSK through an SIP message, such as an INVITE message or a Subscribe message. The message carries an IMPU and channel information requesting for authorization.

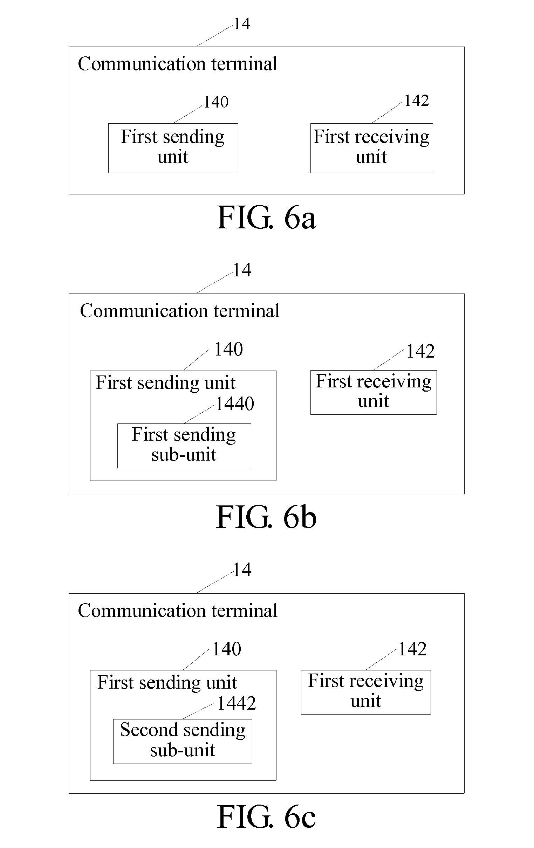

As shown in FIG. 6a, a communication terminal 14 includes a first sending unit 140 and a first receiving unit 142. The first sending unit 140 is configured to send a service authorization request to a service control device in an IMS system, or is configured to send a service authorization request carrying an IMPU to a security module. The service authorization request is used to request a service decryption code of an MBMS service from a network side. The first receiving unit 142 is configured to receive a service decryption code of an MBMS service sent by a security device of the network side. Specifically, the service decryption code may be directly sent by the security device by MIKEY, or may be sent by the security module to a UE through a service control module.

As shown in FIG. 6b and FIG. 6c, the first sending unit 140 includes a first sending sub-unit 1400 or a second sending sub-unit 1402. The first sending sub-unit 1400 is configured to send a service authorization request through HTTP POST, and the service authorization request carries an IMPU and a service identity of the UE. The second sending sub-unit 1402 is configured to send a service authorization request through SIP signaling, and the service authorization request carries an IMPU and a service identity of the UE.

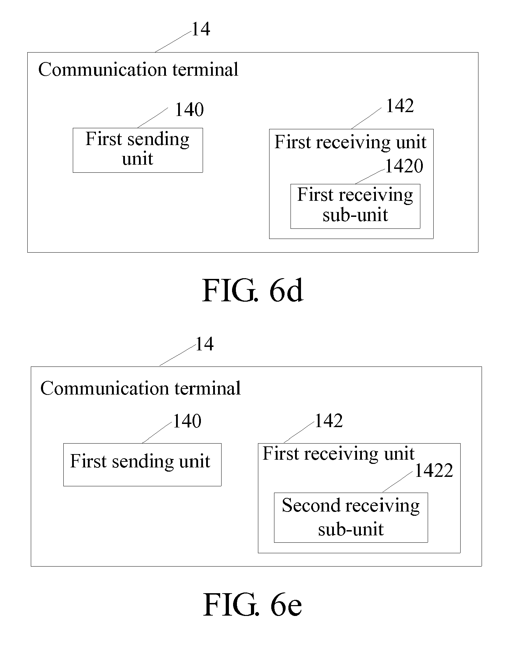

As shown in FIG. 6d and FIG. 6e, the first receiving unit 142 includes a first receiving sub-unit 1420 or a second receiving sub-unit 1422. The first receiving sub-unit 1420 is configured to receive a service decryption code sent by a network side by MIKEY. The second receiving sub-unit 1422 is configured to receive a service decryption code sent by the network side through SIP signaling.

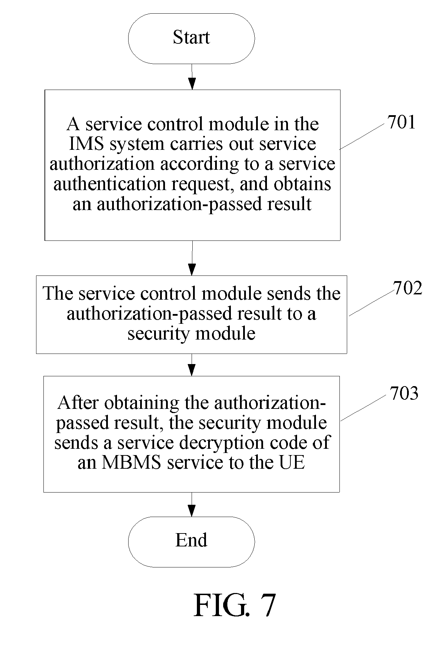

Accordingly, in an embodiment, the present invention provides a method for providing an MBMS service based on an IMS system. As shown in FIG. 7, the method includes the following steps:

In step 701, a service control module in the IMS system carries out service authorization according to a service authorization request, and obtains an authorization-passed result. The service authorization request includes a UE identity and a service identity. Specifically, the UE identity is an IMPU. If a security module can only identify a UE identity of IMSI format, the UE identity included in the authorization-passed result of the service control module is an IMSI. The service control module needs to convert the IMPU in the obtained service authorization request into a corresponding IMSI.

Moreover, the authorization-passed result should include a service identity or a decryption code (an MSK identity), so as to make the security module obtain a corresponding decryption code according to the identity. If the security module cannot obtain a corresponding MSK identity according to the service identity, the service control module further needs to convert the service identity in the authorization-passed result into a corresponding MSK identity.

In step 702, the service control module sends the authorization-passed result to the security module.

In step 703, after obtaining the authorization-passed result, the security module sends a service decryption code of an MBMS service to the UE. It should be noted that service content of the MBMS service provided to the UE is encrypted by using an encryption code, the encryption code can be referred to as an MTK, and actually the service decryption code sent herein may be a decryption code (MSK) used to decrypt the MTK.

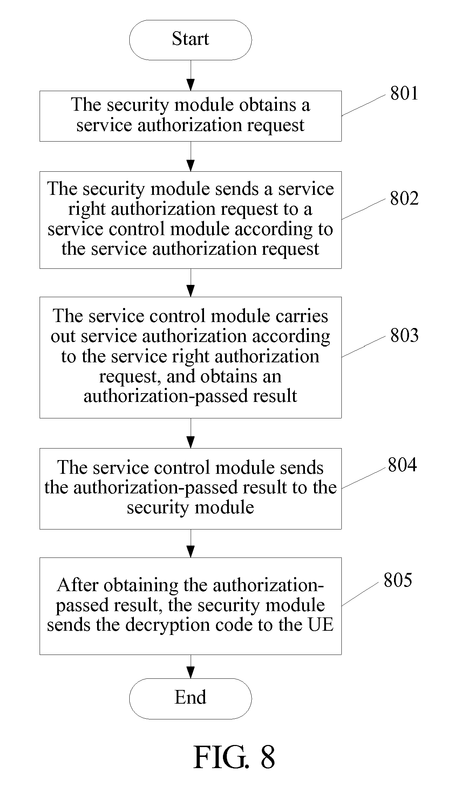

Furthermore, as shown in FIG. 8, the process may include the following steps:

In step 801, the security module obtains a service authorization request of the UE.

In step 802, the security module sends a service right authorization request to a service control module in the IMS system according to the service authorization request.

In step 803, the service control module carries out service authorization according to the service right authorization request, and obtains an authorization-passed result.

In step 804, the service control module sends the authorization-passed result to the security module.

In step 805, after obtaining the authorization-passed result, the security module sends the decryption code to the UE.

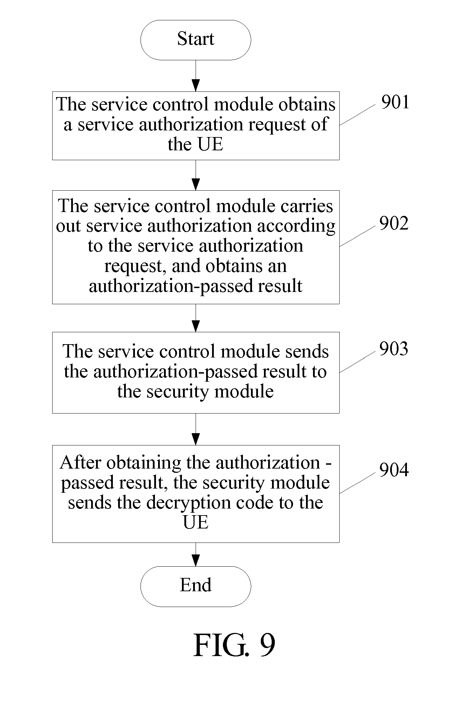

Or, as shown in FIG. 9, the process includes the following steps:

In step 901, the service control module in the IMS system obtains a service authorization request of the UE.

In step 902, the service control module carries out service authorization according to the service authorization request, and obtains an authorization-passed result.

In step 903, the service control module sends the authorization-passed result to the security module.

In step 904, after obtaining the authorization-passed result, the security module sends the decryption code to the UE.

In the processes shown in FIG.7, FIG. 8, and FIG. 9, the security module may send the decryption code to the UE by MIKEY, or may send the decryption code to the service control module, and then the service control module sends the decryption code to the UE through an IMS Core. When the UE sends the authorization pass request, the authorization pass request can be transmitted by establishing a session through SIP session signaling or SIP non-session signaling.

Moreover, after the step 805 and step 904, the following steps may be included:

The security module sends an updated decryption code to the UE.

The UE decrypts the provided service content according to the decryption code.

Before the step 801 and step 901, the security module and the UE generates an encryption code, which is used to encrypt the decryption code. Specifically, the encryption code may be an MUK and an MBMS Request Key (MRK) generated in a GBA/GAA process.

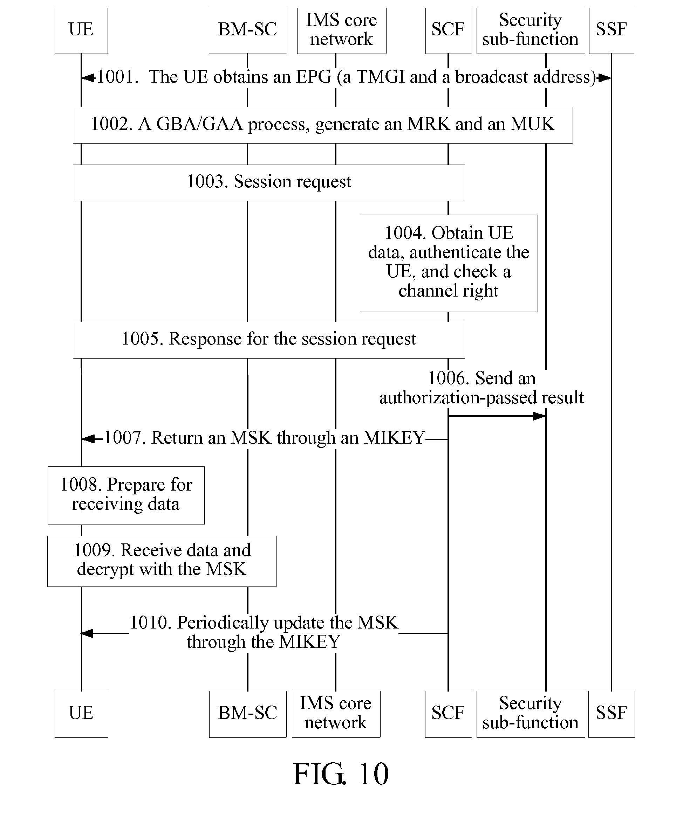

FIG. 10 is a timing chart of a UE accessing a home location service from the home location. It should be noted that some prerequisite preparation steps are performed before the process shown in FIG. 10, such as deploying an MBMS service, preparing a broadcast/multicast source, and deploying channel identities and managing service keys when IPTV services are playing. The IPTV subscription data is stored in a service control module (SCF). Specifically, the subscription data may be stored in the SCF or a Home Subscriber Server (HSS)-like entity. If the IPTV service subscription data is stored in the HSS-like entity, the SCF needs to obtain data from the HSS in the process. The process of the embodiment is described below.

In step 1001, a UE obtains a home location EPG in the service discovery process, and the EPG may include a Temporary Mobile Group Identity (TMGI) and a broadcast address. If the UE has established an MBMS service, this step is not performed, for example, when the UE switches MBMS/IPTV channels, the UE may have obtained the EPG. Therefore, this step is optional.

In step 1002, in a GBA/GAA process, the UE passes Hypertext Transfer Protocol Digest (HTTP Digest) authorization, and the security module (or referred to as a security sub-function) generates an MRK and an MUK for the UE. The MRK is used to authorize between the UE and the security sub-function, and the MUK is used to encrypt an MSK. This step is optional. Or, this step may be implemented by carrying a Bootstrapping Transaction Identifier (B-TID, a GBA temporary UE identity) in the process of establishing a session.

In step 1003, the UE initiates a session establishment request, such as an SIP session signaling INVITE or an SIP non-session signaling Subscribe, which carries a service authorization request. The service authorization request may carry a UE identity, the service identity that the UE needs to apply for, and so on.

Specifically, the UE sends the session establishment request to the IMS Core, and the session establishment request carries a service authorization request. Specifically, the service authorization request may carry one or more channel identities to obtain service authorization of a corresponding channel. Then, the IMS Core routes the session establishment request to the SCF.

In step 1004, after receiving the session establishment request, the SCF carries out service authorization according to the service authorization request carried in the session, that is, a right of the UE is authorized based on an IMPU.

The specific content of the authorization is to check whether the UE with the IMPU identity has the right to watch the requested channel. If the subscription data of the IPTV service right is at an HSS-like entity, the SCF firstly needs to obtain the subscription data from the HSS-like entity, and then authorize the data.

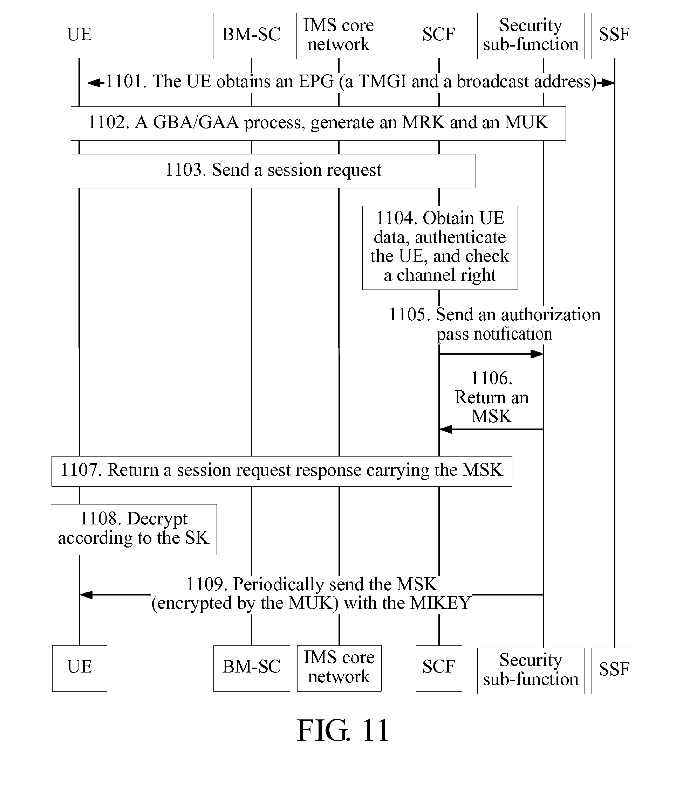

In step 1005, the SCF sends a session establishment success response to the UE, and the response is returned based on the UE session establishment. If the security module sends an MSK by MIKEY, the response may carry no corresponding MSK. If the security module sends an MSK to the UE through the session establishment success response of the SCF, the response may carry a corresponding MSK. FIG. 11 and its corresponding description may be referred to for the specific process.

In step 1006, if the SCF passes the service authorization in the step 1004, the SCF sends an authorization-passed result (or referred to as a notification of passing the UE authorization) to the security module, and a channel identity passed authorization (or an MSK identity) may be included.

If the SCF has a mapping relationship between the channel identity and the MSK identity of the channel, the SCF can find the corresponding MSK identity according to the channel identity passed authorization, and the authorization-passed result sent to the security module may be the corresponding MSK identity.

If the SCF does not have the mapping relationship between the channel identity and the MSK identity of the channel, the authorization-passed result sent to the security module may be the channel identity passed authorization. At this time, the security module needs to have a capability of obtaining a corresponding MSK according to the channel identity.

The mapping relationship between the channel identity and the MSK identity may be implemented in the SCF or in the security sub-function. If it is implemented in the SCF, the notification includes the MSK identity, which is also applicable to other embodiments.

It should be noted that the session establishment request received by the SCF is based on the IMPU, if the right notification sent to the Security sub-function is based on the IMSI, a corresponding conversion needs to be performed according to a mapping relationship between the IMPU and the IMSI stored in the SCF or the HSS-like entity, so as to send an appropriate identity to the security module.

In step 1007, the Security sub-function delivers a channel decryption code passed authorization (or referred to as an MSK) to the UE by MIKEY. If the step 1002 is included in the process, the MSK is transmitted after being encrypted by the MUK.

The MSK also may be the one shown in FIG. 11, which is returned to the UE through the session establishment success response.

In step 1008, when the MBMS is an E-Broadcast, the UE prepares for receiving data in the wireless network, that is, performs an MBMS Request, checks bearer, and performs MBMS assignment. If the MBMS is a common broadcast service, the UE may directly receive MBMS data without this step. Therefore, this step is optional.

In step 1009, the MBMS data transmission starts, and the UE decrypts the service content with the received MSK to watch programs. Specifically, if the step 1002 is performed before, the MSK encrypted by the MUK needs to be decrypted firstly. Because the service content sent by the BM-SC is encrypted by the MTK, a corresponding MTK is obtained by decrypting with the MSK. Then the service content is decrypted with the MTK, so as to watch programs.

During the entire service period, the session may be removed after the UE obtains a first MSK.

In step 1010, during the MBMS data transmission, the Security sub-function may need to periodically update the MSK. The method of MIKEY MSK update is adopted herein. In addition, the Security sub-function also may deliver the updated MSK to the SCF, and deliver the MSK through SIP signaling.

In the above steps, the UE also may initiate an SIP non-session to request an MSK, and the SCF obtains the MSK from the Security sub-function and returns it to the UE through SIP signaling. The specific process is not described herein.

Herein, the SIP signaling may be 200OK, INFO, PUBLISH, NOTIFY, and other signaling.

FIG. 11 shows a process of obtaining an MSK from a Security sub-function through an SCF and delivering the MSK by returning the MSK in the session establishment success response, which includes the following steps:

In step 1101, the UE obtains an EPG.

In step 1102, in a GBA/GAA process, an MRK and an MUK are generated. The step also may be implemented by carrying a B-TID in the session establishing process, and the SCF instructing the Security sub-function to implement the GBA process.

In step 1103, the UE initiates a session request through SIP signaling, and the request carries a service authorization request. Or, for the SCF, the session request is identified as the service authorization request.

In step 1104, the SCF obtains corresponding UE data (such as a UE identity and a service identity), carries out service authorization (a process of UE authorization and channel right checking), obtains an authorization-passed result, and a next step is implemented.

In step 1105, the SCF sends an authorization pass notification, which specifically may be a message requesting an MSK, and the message includes an MSK identity or a service identity.

In step 1106, the Security sub-function receives the message requesting an MSK, and then returns a corresponding MSK.

In step 1107, the SCF receives the MSK, and then returns the MSK to the UE through a session request response.

In step 1108, the UE may decrypt a program according to the received MSK for watching.

In step 1109, when the UE watches a program, because the program is continuously transmitted, an encryption code of program data often needs to be updated (such as periodically updating an MTK), that is, the Security sub-function needs to frequently update the encryption code MTK of the program data sent by the BM-SC (not shown), and correspondingly, the UE's decryption code needs to be updated.

In step 1107, the SCF also may send the MSK to the UE through other SIP signaling message, such as NOTIFY.

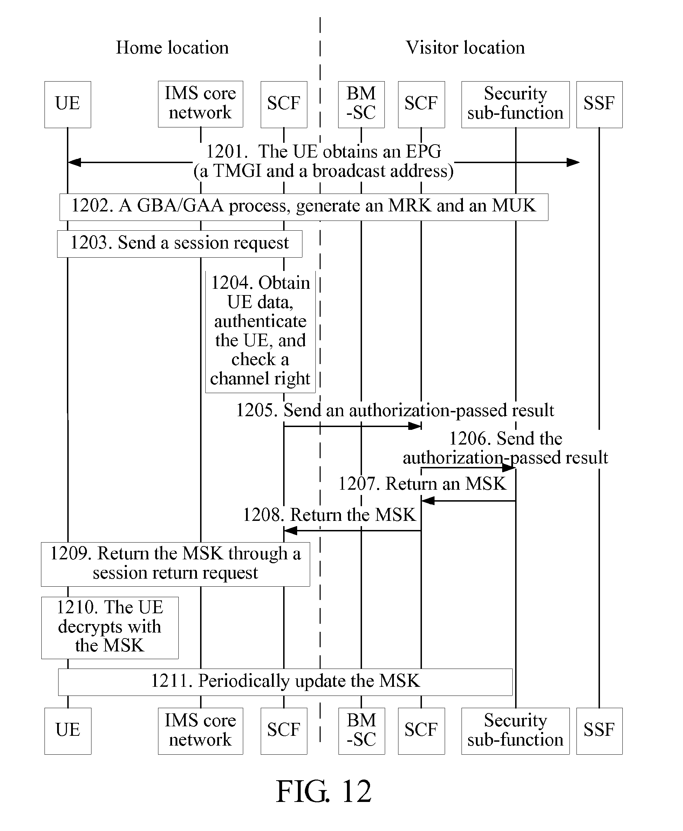

FIG. 12 shows a timing process of a UE accessing a visitor location service from the visitor location. For example, a mobile UE may be in a roaming state, and it is a security module of the visitor location that sends an MSK to the UE, and thus, the process includes the following steps:

In step 1201, the UE obtains a visitor location EPG in a service discovery process, which may include a TMGI and a broadcast address.

In step 1202, in a GBA/GAA process, the UE passes HTTP Digest authorization, and generates an MRK and an MUK in the UE and the Security sub-function. This step is optional. The step also may be implemented by carrying a B-TID, and the SCF instructing the Security sub-function to implement the GBA process.

In step 1203, the UE sends a session establishment request.

The UE initiates the session establishment request to an IMS Core, which may carry one or more channel identities.

The IMS Core routes the session establishment request to a home location SCF.

In step 1204, after receiving the session establishment request, the home location SCF checks an IPTV service roaming right for the UE, and after passing the check, checks a channel right for the UE. If the IPTV service subscription data is in an HSS-like entity, the SCF firstly needs to obtain the subscription data from the HSS-like entity, and then authorizes the subscription data.

In step 1205, the home location SCF obtains an authorization-passed result that includes a channel identity passed authorization, routes the session to the visitor location SCF, and carries the channel identity passed authorization.

In step 1206, the visitor location SCF sends a notification of passing the UE authorization to the visitor location Security sub-function, and the notification may include the channel identity passed authorization.

In step 1207, the visitor location Security sub-function sends an MSK (encrypted by an MUK) of the channel passed authorization to the visitor location SCF.

In step 1208, the visitor location SCF delivers the obtained MSK (encrypted by the MUK) to the home location SCF through a session establishment success response.

In step 1209, the home location SCF delivers the MSK to the UE.

In step 1210, the UE decrypts an MTK with the received MSK, thereby decrypting the received data, so as to watch a program.

In step 1211, the visitor location Security sub-function periodically updates the MSK accordingly. Specifically, an MSK update process is initiated by delivering the MSK to the visitor location SCF, or through an MIKEY MSK update process. Or, the UE initiates an MSK update process through re-negotiating a session carrying a channel identity whose MSK needs to be updated.

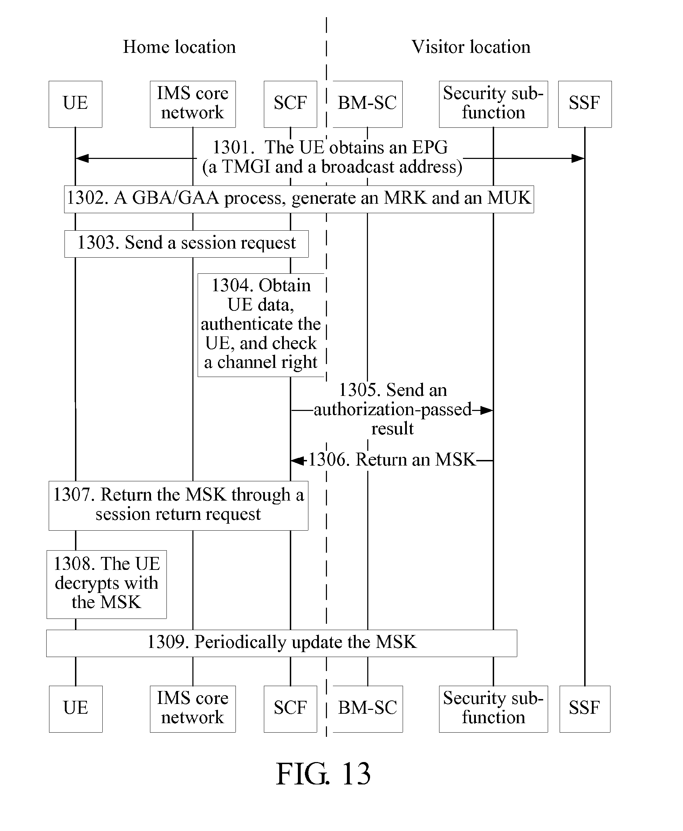

If the visitor location has no SCF, the home location SCF directly interacts corresponding information with the security module, and the specific process is shown in FIG. 13, which includes the following steps:

In step 1301, the UE obtains a visitor location EPG in a service discovery process, which may include a TMGI and a broadcast address.

In step 1302, in a GBA/GAA process, the UE passes HTTP Digest authorization, and generates an MRK and an MUK in the UE and the Security sub-function. The step also may be achieved by carrying a B-TID, and the SCF instructing the Security sub-function to implement the GBA process.

In step 1303, the UE sends a session establishment request.

The UE initiates the session establishment request to an IMS Core, which may carry one or more channel identities.

The IMS Core routes the session establishment request to a home location SCF.

In step 1304, after receiving the session establishment request, the home location SCF checks an IPTV service roaming right for the UE, and after passing the check, checks a channel right for the UE. Then, an MSK needs to be obtained from the visitor location Security sub-function according to a channel identity passed authorization. Herein, because the home location SCF directly accesses the visitor location Security sub-function, the home location SCF needs to be pre-configured to address the visitor location Security sub-function. For example, addresses of all the visitor location Security sub-functions allowed to be routed (or the network elements thereof) are configured on the home location SCF.

In step 1305, the home location SCF sends an authorization-passed result to the visitor location Security sub-function. At this time, the home location SCF should have a capability of acquiring a routing to the visitor location Security sub-function.

In step 1306, the visitor location Security sub-function sends an MSK required by the home location SCF to the home location SCF.

In step 1307, the home location SCF returns the received MSK to the UE in a session establishment success response.

In step 1308, the UE decrypts the received MBMS service with the received MSK.

In step 1309, the visitor location Security sub-function periodically updates the MSK (encrypted by an MUK) by MIKEY.

In the above steps, after obtaining the MSK, the UE may initiate a session remove request to remove the session, and the home location SCF may initiate a session remove success response according to the session remove request.

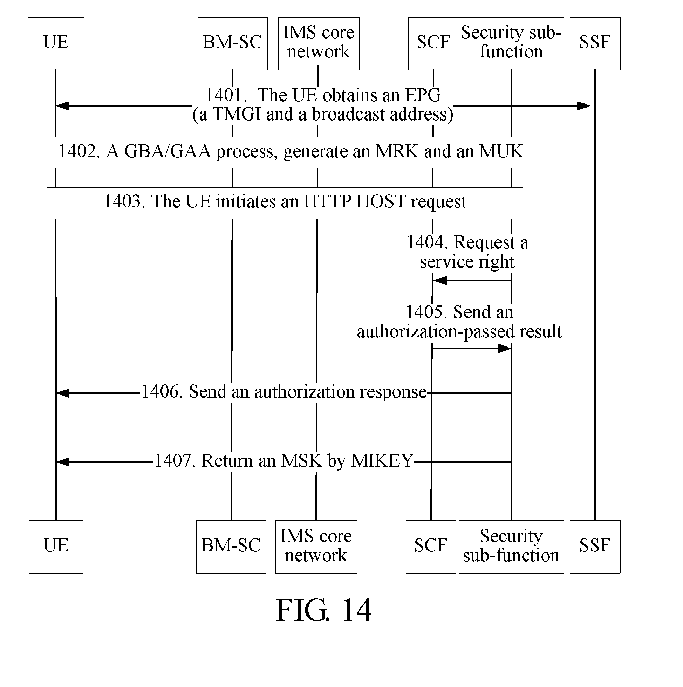

In FIG. 11, FIG. 12, and FIG. 13, the service authorization request sent by the UE is sent to the SCF firstly, and then the SCF forwards the service authorization request to the security module. In the embodiment shown in FIG. 14, the service authorization request is directly sent to the security module, which includes the following steps:

In step 1401, the UE obtains a visitor location EPG in a service discovery process, which may include a TMGI, a broadcast address, and so on. This step is optional.

In step 1402, in a GBA/GAA process, the UE passes HTTP Digest authorization, and generates an MRK and an MUK in the UE and a Security sub-function. This step is optional.

In step 1403, the UE initiates an HTTP POST request. The HTTP POST request carries a service authorization request, and the service authorization request includes a UE identity, a registering indication, and an MBMS service identity. The UE identity adopts an IMPU. The HTTP POST request may be directly sent to the Security sub-function without passing through the SCF.

In step 1404, after receiving the request, the Security sub-function sends a service authorization request to the SCF to request a service right of the IMPU. If the service right of the IMPU is stored in an HSS-like entity, the SCF needs to firstly obtain the service right from the HSS-like entity.

In step 1405, the SCF authorizes the service according the service authorization request, generates a corresponding authorization-passed result for the service passed authorization, and sends the authorization-passed result to the Security sub-function. The authorization-passed result identifies which services pass the authorization.

In step 1406, the Security sub-function sends an authorization response to the UE.

In step 1407, the Security sub-function sends an MSK to the UE by MIKEY according to the authorization-passed result. After obtaining the MSK, the UE performs decryption accordingly. At the same time, the Security sub-function may periodically send the MSK to the UE.

The processes shown in FIG. 7 to FIG. 14 is applicable to a situation in which the UE obtains the MSK for the first time to use the MBMS service, and also applicable to a situation in which the UE needs to switch from one MBMS IPTV service to another MBMS IPTV service.

When watching IMS/MBMS IPTV services, the UE needs to switch channels. At this time, three situations may exist.

In Situation 1, before or after the UE switches channels, the MSK is unchanged, for example, the UE switches in the same service package (with the same MSK). At this time, the UE only needs to receive contents of a new channel, and decrypts them with the original MSK, and thus the UE can watch the contents of a new channel.

In Situation 2, before or after the UE switched channels, the MSK is changed. At the beginning of establishing a service, the UE has obtained an MSK corresponding to the new channel. At this time, the UE only needs to decrypt contents of the received new channel with the obtained MSK, so as to watch the contents of the new channel.

In Situation 3, before or after the UE switched channels, the MSK is changed, and the UE does not have an MSK of the new channel. When switching the channel, the UE needs to re-obtain a key. If the service is established through a session, the UE may initiate a session re-negotiation to obtain a key. If the MSK needs to be obtained by an MIKEY MSK update process, a GBA/GAA process and the SCF service authorization are necessary at the first time. Also, the MSK may be obtained in an SIP non-session manner.

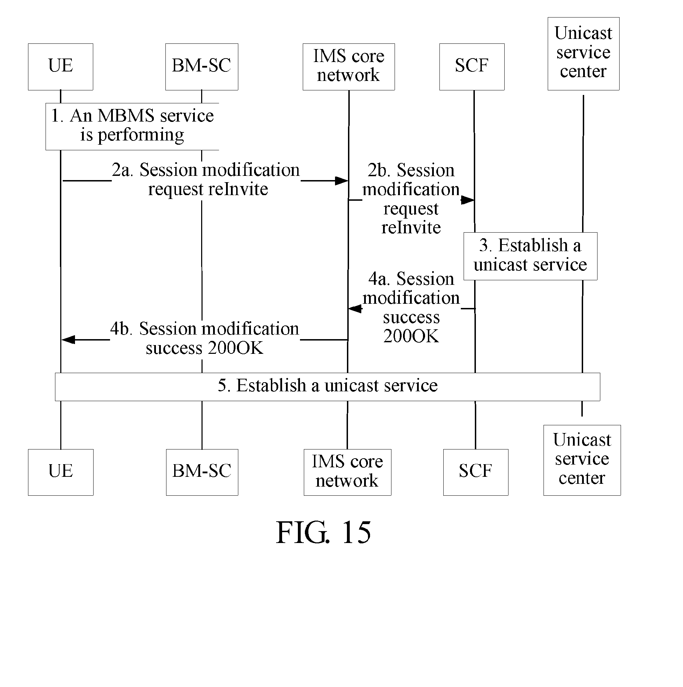

The switching process is as shown in FIG. 15, which includes the following steps:
1). The UE is performing an MBMS service.
   2a). The UE initiates a session modification request reInvite.
   2b). After obtaining the session modification request reInvite, an IMS Core sends it to an S CF.
3). The SCF establishes a unicast service with a unicast service center according to the session modification request reInvite.
   4a). After establishing the unicast service, the SCF sends a session modification success response 200OK to the IMS Core.
   4b). The IMS Core sends the session modification success response 200OK to the UE.
5). The UE establishes a unicast service with the unicast service center.

When a key needs to be obtained, the process is similar to the description in FIG. 8 to FIG. 14, which is not described herein again.

In addition, when the UE initiates service registration (carries out service authorization), an indication of de-registration service may be added to the message to instruct the security module that certain MSKs are not required to de-registration services, that is, to instruct the security module that the security module does not periodically deliver an MSK to the UE.

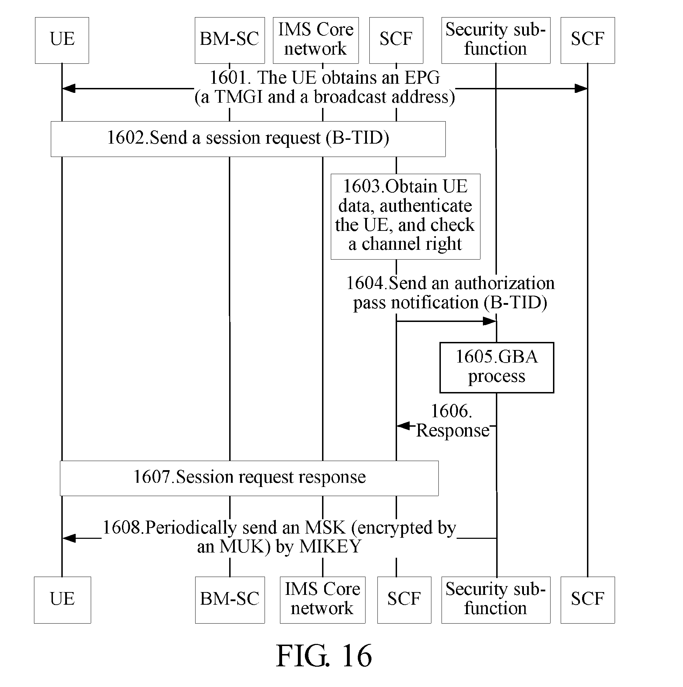

FIG. 16 is a schematic flow chart of Embodiment 8 of a method for providing an MBMS service based on an IMS system according to the present invention.

In the above description, the GBA process and the service establishing process are independent. In FIG. 16, when a B-TID is carried in a session process, and an SCF notifies a Security sub-function of an authorization message, the Security sub-function is also notified to perform the GBA process, which includes the following steps:

In step 1601, the UE obtains an EPG.

In step 1602, the UE initiates a session request through SIP signaling, and the session request carries a service authorization request. Or, for an SCF, the session request is identified as the service authorization request, and the session request carries a B-TID.

In step 1603, the SCF obtains corresponding UE data (such as a UE identity and a service identity), carries out service authorization (a process of UE authorization and channel right checking), obtains an authorization-passed result, and a next step is implemented.

In step 1604, the SCF sends an authorization pass notification to the Security sub-function. Specifically, the authorization pass notification may be right information of the UE, which includes an MSK identity or a service identity, and carries a B-TID.

In step 1605, after obtaining the notification, the Security sub-function interacts with the BSF to execute the GBA process according the B-TID, obtains relative information about a key, and generates an MUK to encrypt the MSK. (The interaction information between the Security sub-function and the BSF is not shown herein.)

In step 1606, the Security sub-function returns a response to the SCF.

In step 1607, after receiving the response from the Security sub-function, the SCF returns a session request response to the UE, which specifically may be a session establishment success response 200 OK.

In step 1608, the Security sub-function periodically sends an MSK encrypted by the MUK to the UE.

The UE may encrypt an MTK with the MSK, so as to decrypt the received encrypted data.

It can be known from the above description that, in the embodiments of the present invention, a controlling capacity of an IMS and a bearer capacity of an MBMS are multiplexed based on an IMS system and an MBMS system to achieve IPTV services, so as to achieve uniform authorization, uniform network management, uniform strategy control, uniform charging, and uniform bill. The binding of the IPTV service with other services based on the IMS can be achieved by using the IMS, and personalized services can be provided to UEs. Therefore, IMS network operators are able to use the network capability as much as possible, the MBMS providers are able to focus more on their area of expertise, the UEs can avoid the inconvenience because of multiple identities, and the limitation that the UE identities are checked only through an IMSI is addressed.

Through the descriptions of the preceding embodiments, those skilled in the art may understand that the present invention may be implemented by using hardware only or by using software and a necessary universal hardware platform. However, in most cases, using software and a necessary universal hardware platform are preferred. Based on such understanding, the actual part or the part contributing to the prior art of the technical solutions of the present invention can be reflected in the form of software products. The computer software products are stored in readable storage media, such as a soft disk, hard disk, or optical disk of the computer, which includes multiple instructions to make computer equipment (such as a personal computer, a server, and a network equipment) execute the methods in each embodiment of the present invention.

The above descriptions are merely preferred embodiments of the present invention, but not intended to limit the scope of the present invention. Any modification, equivalent replacement, or improvement made according to the appended claims of the present invention should fall within the scope of the present invention.

## Claims

1. A method for providing a Multimedia Broadcast/Multicast Service, MBMS, service based on an IP Multimedia Subsystem, IMS, system, comprising:
carrying out, by a service control module in the IMS system, service authorization according to a service authorization request, and obtaining an authorization-passed result; and
sending, by the service control module, the authorization-passed result to a security module, wherein the authorization-passed result is used to instruct the security module to send a service decryption code of an MBMS service according to the authorization-passed result.

2. The method according to claim 1, wherein the carrying out, by the service control module in the IMS system, the service authorization according to the service authorization request and obtaining the authorization-passed result comprises:
receiving, by the service control module, the service authorization request sent by a user equipment, UE, through the security module; and
carrying out, by the service control module, the service authorization according to the service authorization request, and obtaining the authorization-passed result.

3. The method according to claim 1, wherein the carrying out, by the service control module in the IMS system, the service authorization according to the service authorization request and obtaining the authorization-passed result comprises:
receiving, by the service control module in the IMS system, the service authorization request sent by the UE through an IMS core network; and
carrying out, by the service control module, the service authorization according to the service authorization request, and obtaining the authorization-passed result.

4. The method according to any one of claims 1 to 3, wherein the sending, by the security module, the service decryption code of the MBMS service to the UE comprises:
sending, by the security module, the service decryption code to the UE by Multimedia Internet Keying, MIKEY;
or, sending, by the security module, the service decryption code to the service control module, and sending, by the service control module, the service decryption code to the UE through the IMS core network.

5. The method according to any one of claims 1 to 3, wherein the service authorization request is transmitted through Session Initiation Protocol, SIP, session signaling or SIP non-session signaling.

6. The method according to claim 5, wherein the service authorization request carries a Generic Bootstrapping Architecture, GBA, temporary UE identity Bootstrapping transaction Identifier, B-TID, the service control module forwards the B-TID to the security module, and the security module interacts with a Bootstrapping Server Function, BSF, to execute the GBA process according to the B-TID.

7. The method according to claim 4, wherein after the sending, by the security module, the service decryption code of the MBMS service to the UE, the method further comprises:
sending, by the security module, an updated service decryption code to the UE.

8. The method according to claim 1, wherein before the carrying out, by the service control module in the IMS system, the service authentication according to the service authentication request, the method further comprises:
interacting, by the security module, with the UE to generate an encryption code, wherein the encryption code is used to encrypt the service decryption code.

9. The method according to any one of claims 1 to 3, wherein the service authorization request comprises a UE identity and a service identity, and the UE identity is an Internet protocol multimedia public identity, IMPU.

10. The method according to claim 9, wherein if the authorization-passed result comprises a service identity, the sending, by the security module, the service decryption code of the MBMS service to the UE according to the authorization-passed result comprises:
matching, by the security module, a corresponding decryption code identity according to the service identity, and sending a service decryption code of the MBMS service corresponding to the decryption code identity to the UE.

11. The method according to claim 9, wherein the authentication-passed result comprises a decryption code identity, and the decryption code identity is a corresponding decryption code identity matched by the service control module according to the service identity, and the decryption code identity carried in the authentication-passed result;
the sending, by the security module, the service decryption code of the MBMS service to the UE according to the authentication-passed result comprises:
sending, by the security module, the service decryption code of the MBMS service corresponding to the decryption code identity to the UE according to decryption code identity.

12. A security device, comprising:
a first receiving module, configured to receive an authentication-passed result sent by a service control module in an IP Multimedia Subsystem, IMS, system; and
a first sending module, configured to send a service decryption code of a Multimedia Broadcast/Multicast Service, MBMS, service to a user equipment, UE, according to the authentication-passed result.

13. The device according to claim 12, further comprising:
a second receiving module, configured to receive a service authentication request of the UE; and
a second sending module, configured to send the service authentication request to the service control module.

14. The device according to claim 12, wherein the first sending module sends a service decryption code to the UE by Multimedia Internet Keying, MIKEY, or sends a service decryption code to the service control device, and then the service control device sends the service decryption code to the UE through SIP signaling.

15. The device according to any one of claims 12 to 14, further comprising:
an update sending module, configured to send an updated decryption code to the UE.

16. The device according to any one claims 12 to 14, wherein,
if the authentication-passed result received by the first receiving module comprises a decryption code identity, the first sending module is configured to send a service decryption code of an MBMS service corresponding to the decryption code identity to the UE according to the authentication-passed result; or
if the authentication-passed result received by the first receiving module comprises a service identity, the first sending module comprises a conversion sub-module and a sending sub-module, wherein
the conversion sub-module is configured to match a corresponding decryption code identity according to the service identity in the authentication-passed result; and
the sending sub-module is configured to send a service decryption code of the MBMS service corresponding to the decryption code identity to the UE according to the decryption code identity obtained by the conversion sub-module.

17. A service control device in an IP Multimedia Subsystem, IMS, system, comprising:
a first authorization sub-module, configured to carry out service authorization according to a service authorization request, and obtain an authorization-passed result; and
a first sending sub-module, configured to send the authorization-passed result to a security module, wherein the authorization-passed result is used to instruct the security module to send a service decryption code of a Multimedia Broadcast/Multicast Service, MBMS, service to a user equipment, UE, according to the authorization-passed result.

18. The device according to claim 17, further comprising:
a second receiving sub-module, configured to receive the corresponding service decryption code sent by the security module according to the authentication-passed result; and
a second sending sub-module, configured to send the service decryption code to the UE through Session Initiation Protocol, SIP, signaling.

19. The device according to claim 17, wherein if the authorization-passed result obtained by the first authorization sub-module comprises a service identity, the first sending sub-module comprises:
a conversion sub-unit, configured to match a corresponding decryption code identity according to the service identity in the authorization-passed result; and
a first sending sub-unit, configured to send the authorization-passed result comprising the decryption code identity obtained by the conversion sub-unit to the security module.

20. The device according to any one of claims 17 to 19, further comprising a first receiving sub-module or a third receiving sub-module, wherein:
the first receiving sub-module is configured to receive a service authorization request sent by the UE through an IMS core network; and
the third receiving sub-module is configured to receive a service authorization request sent by the UE through the security module.

21. A system for providing a Multimedia Broadcast/Multicast Service, MBMS, service based on an IP Multimedia Subsystem, IMS, system, comprising:
a service control module in the IMS system, configured to carry out service authorization according to a service authorization request, obtain an authorization-passed result, and send the authorization-passed result to a security module;
a security module, configured to send a service decryption code of an MBMS service to a user equipment, UE, according to the authorization-passed result; and
a broadcast/multicast service center, BM-SC, configured to provide an MBMS service to the UE, wherein a service content of the MBMS service is used after being decrypted by the service decryption code.

22. The system according to claim 21, wherein the service control module comprises:
a first receiving sub-module or a third receiving sub-module, wherein the first receiving sub-module is configured to receive a service authorization request sent by the UE, and the third receiving sub-module is configured to receive a service authorization request sent by the security module;
a first authorization sub-module, configured to carry out service authorization according to the service authorization request, and obtain an authorization-passed result, wherein the authorization-passed result comprises a service identity;
a first sending sub-module, configured to send the authorization-passed result comprising the service identity to the security module; or comprising:
a conversion sub-unit, configured to match a corresponding decryption code identity according to the service identity in the authorization-passed result; and
a first sending sub-unit, configured to send the authorization-passed result comprising the decryption code identity obtained by the conversion sub-unit to the security module.

23. The system according to claim 22, wherein the security module comprises:
a first receiving module, configured to receive the authorization-passed result sent by the service control module in the IMS system; and
a first sending module, configured to send a service decryption code to the UE by Multimedia Internet Keying, MIKEY, according to the authorization-passed result, or send a service decryption code to a service control device, wherein the service control device then sends the service decryption code to the UE through SIP signaling.

24. The system according to claim 22 or 23, wherein the security module comprises:
a second receiving module, configured to receive the service authentication request sent by the UE; and
a second sending module, configured to send the service authentication request to the service control module.

25. A communication terminal, comprising a first sending unit and a first receiving unit, wherein,
the first sending unit is configured to send a service authorization request to a service control device in an IP Multimedia Subsystem, IMS, system, or send a service authorization request carrying an Internet protocol multimedia public identity, IMPU, to a security module, wherein the service authorization request is used to request a service decryption code of a Multimedia Broadcast/Multicast Service, MBMS, service from a network side; and
the first receiving unit is configured to receive the service decryption code of an MBMS service sent by the security device of the network side.

26. The communication terminal according to claim 25, wherein the first sending unit comprises:
a first sending sub-unit, configured to send a service authorization request through Hypertext Transfer Protocol POST, HTTP POST, wherein the service authorization request carries an IMPU and a service identity of a user equipment, UE,
or, a second sending sub-unit, configured to send a service authorization request through Session Initiation Protocol, SIP, signaling, wherein the service authorization request carries an IMPU and a service identity of the UE.

27. The communication terminal according to claim 26, wherein the first receiving unit comprises a first receiving sub-unit and a second receiving sub-unit, wherein
the first receiving sub-unit is configured to receive a service decryption code sent by a network side by Multimedia Internet Keying, MIKEY; and
the second receiving sub-unit is configured to receive a service decryption code sent by the network side through SIP signaling.
